# EUROPÄISCHE PATENTSCHRIFT

(11) **EP 0 584 560 B1**
(45) Veröffentlichungstag und Bekanntmachung des Hinweises auf die Patenterteilung: **08.10.1997**
(21) Anmeldenummer: 93111990.3
(22) Anmeldetag: 27.07.1993
(51) Int. Cl.: G01M 1/06

(54) **Verfahren und Vorrichtung zum Antreiben eines zur Unwuchtmessung frei drehbaren, insbesondere angehobenen, an einem Kraftfahrzeug montierten Kraftfahrzeugrades**
Procedure and device for rotating a wheel mounted on a vehicle in order to balance the wheel, which is cleared from the ground by lifting the vehicle
Procédé et dispositif d'entraînement en rotation d'un roue montée sur un véhicule en vue de son équilibrage, la roue étant dégagée du sol

(30) Priorität: 25.08.1992 DE 4228143
(43) Veröffentlichungstag der Anmeldung: 02.03.1994
(73) Patentinhaber: HOFMANN WERKSTATT-TECHNIK GMBH, D-64319 Pfungstadt (DE)
(72) Erfinder: Goebel, Eickhart, Dipl.-Ing., D-64319 Pfungstadt (DE)
(74) Vertreter: Nöth, Heinz, Dipl.-Phys.

(56) Entgegenhaltungen:
- EP-A- 0 355 304
- US-A- 4 980 621

## Beschreibung

Die Erfindung betrifft ein Verfahren nach dem Oberbegriff des Patentanspruches 1 und eine Vorrichtung nach dem Oberbegriff des Patentanspruches 2.

Ein derartiges Verfahren und eine derartige Vorrichtung sind aus der DE 38 28 724 A1 (EP 0 355 304 A2 und US-PS 4,956,998) bekannt. Es handelt sich hier um die Ermittlung der Unwuchten von am Kraftfahrzeug montierten Kraftfahrzeugrädern. Hierbei kann zur Erzielung der freien Drehbarkeit das zu messenden Kraftfahrzeugrad, bestehend aus Scheibenrad und darauf aufgezogenem Luftreifen, das Rad hochgebockt werden. Um das zu messende Rad auf die erforderliche Drehzahl zu bringen, wird ein von einem Elektromotor angetriebenes Friktionsrad gegen den Luftreifen gedrückt. Für einen schlupffreien Antrieb werden bei dem bekannten Verfahren und der bekannten Vorrichtung zwei bestimmte Anpreßkräfte vorgesehen, die Schaltschwellenwerte für das Ein- und Ausschalten des Antriebsmotors und damit der Friktionsscheibe darstellen. Die erforderliche Anpreßkraft ist dabei so bemessen, daß beim Einschalten das vom Antriebsmotor vermittelte Antriebsmoment und beim Ausschalten ein verringertes Antriebs- bzw. Bremsmoment schlupffrei auf das Rad übertragen werden. Das Erzielen von Schlupffreiheit ist dadurch erschwert, daß die Schaltkräfte in Abhängigkeit von maximalem Motormoment und dem kleinsten Reibwert zwischen zu messendem Kraftfahrzeugrad und Friktionsscheibe festgelegt werden müssen. Hierbei ist das vom Motor vermittelte Antriebsmoment abhängig von der Motordrehzahl, von der Betriebsspannung (mindestens ca. 360 V, maximal ca. 440 V) und der Motortemperatur. Der Reibwert zwischen Kraftfahrzeugrad, insbesondere dem Luftreifen, und dem Friktionsrad ist beispielsweise noch vom Zustand des Luftreifens (naß oder trocken) abhängig.

Weiterhin ist die Anwendung einer Schlupfregelung beim riemengetriebenen Auswuchten aus der US-A-4 980 621 bekannt.

Aufgabe der Erfindung ist es, ein Verfahren und eine Vorrichtung der eingangs genannten Art zu schaffen, mit denen die Erzielung von Schlupffreiheit erleichtert wird.

Diese Aufgabe wird beim Verfahren der eingangs genannten Art erfindungsgemäß durch die kennzeichnenden Merkmale des Patentanspruches 1 und bei der Vorrichtung der eingangs genannten Art erfindungsgemäß durch die kennzeichnenden Merkmale des Patentanspruches 2 gelöst.

Bei der Erfindung werden die Umfangsgeschwindigkeiten des Friktionsrades und des Kraftfahrzeugrades, bezogen auf den Umfang, an welchem das Friktionsrad am Kraftfahrzeugrad bzw. am Luftreifen des Kraftfahrzeugrades anliegt, ermittelt. In Abhängigkeit vom Unterschied dieser beiden gemessenen Umfangsgeschwindigkeiten wird das Drehmoment bzw. die Drehzahl des Elektromotors geregelt. Diese Regelung kann eine unstetige Regelung (Ein-/Ausschalten) oder eine stetige Regelung sein, wobei die stetige Regelung so durchgeführt wird, daß die Differenz der beiden gemessenen Umfangsgeschwindigkeiten innerhalb eines Toleranzbereiches bleibt. Hierbei können Phasenausschnittsteuerung oder Frequenzregelung durch Frequenzumrichter zum Einsatz kommen.

Für die Erfassung der Umfangsgeschwindigkeit des Kraftfahrzeugrades kann eine am Kraftfahrzeugrad anliegende Abtastrolle verwendet werden. Diese Abtastrolle ist bevorzugt auf die Lauffläche des Luftreifens aufgesetzt. Die Abtastrolle kann jedoch an jeder anderen geeigneten Stelle des Kraftfahrzeugrades am Scheibenrad bzw. am Luftreifen aufgesetzt sein. Auch eine berührungslose Abtastung - beispielsweise optische Abtastung - ist möglich. Bei der berührungslosen Abtastung können Oberflächenstrukturen am Scheibenrad oder am Luftreifen erfaßt werden, wobei aus der Wiederholung des kompletten Strukturmusters oder aus der Wiederholung von markanten Strukturen pro Zeiteinheit die Umfangsgeschwindigkeit des Rades ermittelt wird.

Von der Abtastrolle bzw. der optischen Abtasteinrichtung werden umlaufgeschwindigkeitsproportionale elektrische Signale abgegeben, die in einer zur Geschwindigkeitsmeßeinrichtung gehörigen Auswerteeinrichtung (Auswerteschaltung) in bezug auf den Radius des Berührungsumfanges um die Raddrehachse gesetzt werden, an welchem das Friktionsrad am Kraftfahrzeugrad anliegt. Diese Auswerteeinrichtung liefert als Ausgangssignal ein Umfangsgeschwindigkeitssignal, das proportional der Umfangsgeschwindigkeit des Kraftfahrzeugrades im Berührungsumfangsbereich ist.

Bei der oben angesprochenen unstetigen Regelung, d.h. bei der Regelung durch Ein- und Ausschalten des Motorstroms werden für das Ein- und Ausschalten bestimmte Anpreßkräfte als Ein- und Ausschalt-Schwellenwerte verwendet, wobei wenigstens der Einschalt-Schwellenwert an die Drehmoment-Drehzahlkennlinie des Elektromotors angepaßt variabel ist. Es ist auch möglich, beide Schaltschwellenwerte an die Drehmoment-Drehzahlkennlinie des Elektromotors anzupassen.

Man erreicht eine automatische Anpassung der Drehmoment-Drehzahlkennlinie des Motors in Abhängigkeit von den aktuellen Bedingungen (Betriebsspannung, Temperatur, Reibwert).

Der Unterschied der beiden Umfangsgeschwindigkeiten des Friktionsrades und des Kraftfahrzeugrades im Berührungsumfang entspricht dem Schlupf zwischen Kraftfahrzeugrad und Friktionsrad. Dieser Unterschied der Umfangsgeschwindigkeiten wird zur Regelung des Motors, ausgenützt.

Die erzielten Vorteile sind folgende:

Ein Schlupf zwischen Friktionsrad und zu prüfendem Kraftfahrzeugrad wird sofort erkannt und aufgrund der Regelung verhindert. Ferner ist eine Anpassung der "softdrive"-Funktion an das drehzahlabhängige Drehmoment des Motors (Kennlinie) möglich. Auch läßt sich eine Anpassung der "softdrive"-Funktion an unterschiedliche Netzspannungen erreichen. Unterschiedliche Reibwerte zwischen Friktionsscheibe und zu prüfendem Rad werden automatisch erfaßt und entsprechend berücksichtigt. Die Schalthysterese kann durch Anpassung an unterschiedliche Bedingungen und Betriebsmodi optimiert werden. Ferner läßt sich eine automatische Anpassung der "softdrive"-Funktion an unterschiedliche Radtypen, insbesondere für Personenkraftwagen oder Lastkraftwagen, deren Erkennung über den jeweils zu verwendenden, die Hubeinrichtungen enthaltenden Meßbock möglich ist, erreichen. Die Erkennung, ob es sich bei dem Unwuchtmeßvorgang um die Antriebsräder bzw. die Nichtantriebsräder des Kraftfahrzeuges handelt, läßt sich über die zu verwendende Anzahl der Meßböcke erreichen. Bei den Antriebsrädern werden beide Antriebsräder, die vom Motor des Kraftfahrzeuges angetrieben werden, hochgebockt und angeschlossen, und bei den Nichtantriebsrädern wird jeweils nur ein Nichtantriebsrad für den Meßvorgang mit der Meßelektronik verbunden.

Anhand der Figuren wird an Ausführungsbeispielen die Erfindung noch näher erläutert. Es zeigen:
- Fig. 1: ein Ausführungsbeispiel, und
- Fig. 2: den Verlauf einer Drehmoment-Drehzahlkennlinie eines Elektromotors mit angepaßten Kraftschaltschwellen, welche beim Ausführungsbeispiel der Fig. 1 zur Anwendung kommen.

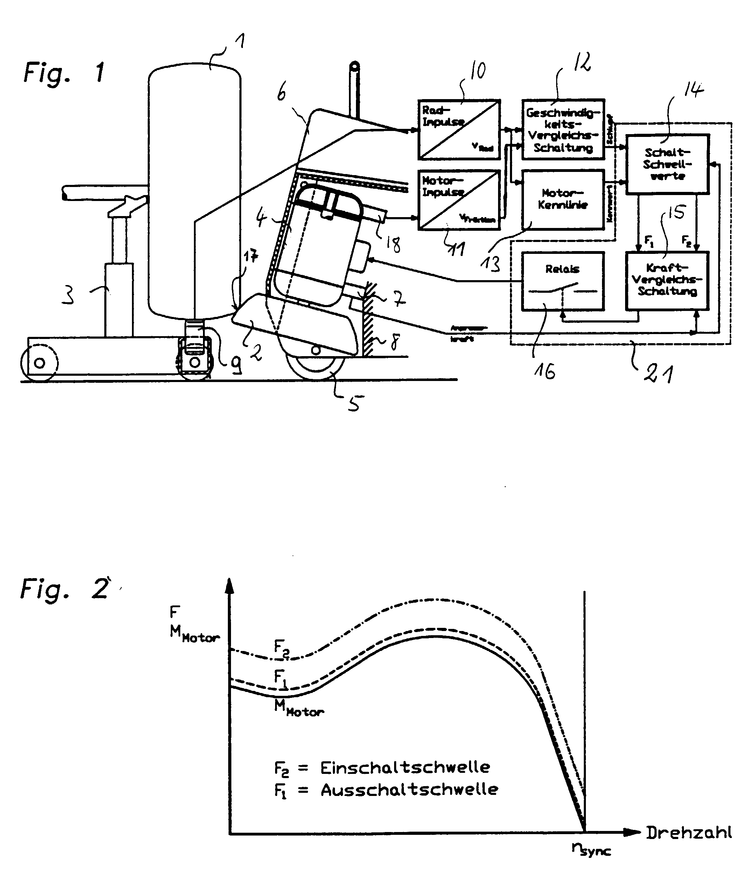

Bei dem in den Figuren 1 und 2 dargestellten Ausführungsbeispiel wird ein zu prüfendes Kraftfahrzeugrad 1 (Scheibenrad mit aufgezogenem Luftreifen) durch einen Radheber 3 angehoben, damit es für den Unwuchtmeßvorgang frei drehbar ist. Der Radheber 3 kann gleichzeitig als Meßbock ausgebildet sein, der beispielsweise aus der DE-OS 20 58 872 bekannt ist. In diesem Fall ist der Meßbock ein Bestandteil der Unwuchtmeßeinrichtung und enthält den Meßwandler, der die durch Radunwuchten erzeugten Fliehkräfte erfaßt.

Zur Unwuchtmeßeinrichtung gehört ferner die in einem auf Rollen 5 fahrbaren Gehäuse untergebrachte, nicht näher dargestellte Auswerteeinrichtung für die vom Meßgeber gelieferten Meßsignale.

Am fahrbaren Gehäuse 6 ist ferner für den Antrieb von Nichtantriebsrädern des Kraftfahrzeuges und zum Abbremsen dieser Räder bzw. zum Abbremsen der Antriebsräder ein Friktionsrad 2, das von einem Elektromotor 4 angetrieben wird, vorgesehen. Eine derartige Anordnung ist beispielsweise aus der DE 38 28 724 A1 bekannt.

Ferner ist eine Abtastrolle 9 vorgesehen, die bei den dargestellten Ausführungsbeispielen auf die Lauffläche des Luftreifens des Kraftfahrzeugrades 1 aufsetzbar ist. Die Abtastrolle 9 kann am Radheber 3 vorgesehen sein. Die Abtastrolle 9 ist mit einem Signalgeber versehen, der ein der Umlaufgeschwindigkeit der Abtastrolle 9 proportionales elektrisches Signal, beispielsweise in Form einer Impulskette, liefert. Dieses Signal wird einer Auswerteeinrichtung 10 für die Umfangsgeschwindigkeit zugeleitet. Die Auswerteeinrichtung 10 berücksichtigt einen Berührungsumfang 17, an welchem das Friktionsrad 2 am Luftreifen des Kraftfahrzeugrades 1 anliegt. Bei den dargestellten Ausführungsbeispielen ist dies die Reifenschulter. Die Auswerteeinrichtung bzw. Auswerteschaltung 10 liefert ein Ausgangssignal, das proportional der Umfangsgeschwindigkeit des Kraftfahrzeugrades 1 am Berührungsumfang 17 ist.

Zur Erfassung der Umfangsgeschwindigkeit des Friktionsrades 2 im Bereich des Berührungsumfanges 17 ist eine Drehzahlmeßeinrichtung 18 (Drehzahlsensor) am Elektromotor 4 vorgesehen. Für die Drehzahlerfassung reicht ein Drehzahlsensor einfachster Bauart. Bevorzugt kann dieser die Flügel des Lüfterrades 23 des Elektromotors 4 abtasten und an der Lüfterhaube - wie bei den dargestellten Ausführungsbeispielen - befestigt sein. Es sind handelsübliche Sensoren, die beispielsweise optisch oder induktiv abtasten, einsetzbar.

Das Ausgangssignal der Drehzahlmeßeinrichtung 18, welches proportional der Drehgeschwindigkeit des Friktionsrades 2 ist, wird an eine Auswerteschaltung 11 weitergeleitet. Die Auswerteschaltung 11 berücksichtigt den Umfang des Friktionsrades 2 im Bereich des Berührungsumfanges 17 und liefert ein Ausgangssignal, das der Umfangsgeschwindigkeit des Frktionsrades 2 im Bereich des Berührungsumfanges 17 proportional ist.

Die Ausgangssignale der beiden Auswerteschaltungen 10 und 11, welche proportional den Umfangsgeschwindigkeiten des Kraftfahrzeugrades 1 und des Friktionsrades 2 im Berührungsumfangsbereich 17 sind, werden einer Vergleichseinrichtung 12 (Vergleichsschaltung) zugeführt. Diese Vergleichsschaltung kann auch als Differenzschaltung ausgebildet sein. Die Vergleichsschaltung 12 stellt den Unterschied zwischen den beiden umlaufgeschwindigkeitsproportionalen Signalen der Auswerteschaltungen 10 und 11 fest und liefert ein entsprechendes Ausgangssignal. Dieses Ausgangssignal ist proportional dem Schlupf zwischen dem Friktionsrad 2 und dem Kraftfahrzeugrad 1. Dieses schlupfproportionale Ausgangssignal der Vergleichseinrichtung 12 wird beim ersten Ausführungsbeispiel (Fig. 1) einer unstetigen Regeleinrichtung 21 und beim zweiten Ausführungsbeispiel (Fig. 3) einer stetigen Regeleinrichtung 22 zugeführt. Die Regeleinrichtungen 21, 22 steuern den Elektromotor 4 in den beiden Ausführungsbeispielen, wie im einzelnen noch erläutert wird.

Beim Ausführungsbeispiel der Fig. 1 ist zwischen dem Gehäuse 6 bzw. einem Gehäuserahmen 8 und dem Friktionsrad 2 eine Kraftmeßeinrichtung 7 in Form eines weglos messenden Kraftsensors vorgesehen. Beim dargestellten Ausführungsbeispiel ist die Kraftmeßeinrichtung 7 zwischen dem Gehäuse des Elektromotors 4 und dem Gehäuserahmen 8 des fahrbaren Gehäuses 6 angeordnet. Die Kraftmeßanordnung 7 liefert ein analoges, der Anpreßkraft, mit welcher das Friktionsrad 2 gegen das Kraftfahrzeugrad 1 angedrückt wird, proportionales Signal. Dieses der Anpreßkraft des Friktionsrades proportionale Ausgangssignal der Kraftmeßeinrichtung 7 wird einem Kraftvergleicher (Kraftvergleichsschaltung) 15 zugeführt. Im Kraftvergleicher 15 wird das der Anpreßkraft proportionale Signal der Kraftmeßeinrichtung 7 mit zwei Schaltschwellen für bestimmte Anpreßkräfte, welche einen Einschalt-Schwellenwert F2 und einen Ausschalt-Schwellenwert F1 darstellen, verglichen. Die Bildung dieser beiden Schaltschwellen F1 und F2 wird im folgenden anhand der Fig. 2 erläutert.

In der Fig. 2 ist die Drehmoment-Drehzahlkennlinie Mₘₒₜₒᵣ des Elektromotors 4 dargestellt. Die den beiden unterschiedlichen Anpreßkräften der Friktionsscheibe 2 an das Kraftfahrzeugrad 1 entsprechenden Schaltschwellen (F1 = Ausschaltschwelle, F2 = Einschaltschwelle) haben einen zur Motorkennlinie Mₘₒₜₒᵣ etwa parallelen Verlauf, d.h. die Schaltschwellen F1 und F2 ändern sich mit der Drehzahl bzw. dem Drehmoment des Elektromotors 4 in der in der Fig. 2 dargestellten Weise. Hierdurch sind die Schaltschellen F1 und F2 variabel ausgelegt und an die aktuelle Raddrehzahl angepaßt. Die Motorkennlinie kann zunächst für mittlere Spannungs- und Temperaturverhältnisse festgelegt sein.

Um die jeweiligen Motordrehzahlen bzw. jeweiligen Antriebsmomenten des Motors zugeordneten Schaltsschwellen F1 und F2 zu erhalten, wird das der Radumlaufgeschwindigkeit proportionale Signal der Auswerteschaltung 10 dem Kennwertgenerator 13 zugeleitet. Dieser errechnet aus der übermittelten aktuellen Radumlaufgeschwindigkeit die zugeordnete schlupffreie Motordrehzahl und leitet in Abhängigkeit davon aus der gespeicherten Motorkennlinie die zugeordneten Motorkennwertsignale an einen Schaltschwellengenerator 14 weiter. Proportional zu diesen Motorkennwerten werden im Schaltschwellengenerator 14 Anpreßkräfte der Friktionsscheibe 2 an das Kraftfahrzeugrad 1 errechnet, welche erforderlich sind, um das Moment des Antriebsmotors 4 über die Friktionsscheibe 2 schlupffrei zu übertragen. Für die eingangs erwähnten Beeinflussungen (Betriebsspannung, Temperatur, Reibwerte, Motordrehzahl) auf die Schlupffreiheit werden zunächst mittlere Standardfaktoren eingesetzt und in Abhängigkeit davon die Schaltschwellen F1 und F2 für das Ein- bzw. Ausschalten des Antriebsmotors 4 generiert. Die Schaltschwellen F1 und F2 berücksichtigen hierbei sowohl eine erforderliche Schalthysterese als auch einen Sicherheitszuschlag. Die Zuordnung der erforderlichen Schaltschwellen darstellenden Anpreßkräfte der Friktionsscheibe 2 an das Kraftfahrzeugrad 1 zu dem Kurvenverlauf der Motorkennlinie ist in Figur 2 dargestellt. Den beiden Schaltschwellen F1 und F2 proportionale Ausgangssignale des Schaltschwellengenerators 14 werden dem Kraftvergleicher 15 zugeleitet. Die beiden Schaltschwellen werden mit dem Ausgangssignal der Kraftmeßeinrichtung 7 im Kraftvergleicher 15 verglichen.

Wird die der Ausschaltschwelle F1 entsprechende Anpreßkraft des Friktionsrades 2 am Kraftfahrzeugrad 1 unterschritten, führt dies zu einer Überschreitung der zulässigen Schlupfgrenze. Der Motor wird dann ausgeschaltet. Für einen weiteren Antrieb des Kraftfahrzeugrades 1 muß dann von der Bedienungsperson das Friktionsrad 2 stärker an den Kraftfahrzeugreifen 1 angedrückt werden. Wenn die der Einschaltschwelle F2 entsprechende Anpreßkraft festgestellt wird, wird der Motor wieder eingeschaltet. Für dieses Ein- und Ausschalten des Elektromotors 4 bzw. des dem Elektromotor 4 zugeführten Speisestroms wird vom Kraftvergleicher 15 eine Schalteinrichtung 16, die als Relais ausgebildet sein kann, angesteuert. Das schlupfproportionale Ausgangssignal der Vergleichseinrichtung 12 und das der aktuellen Anpreßkraft proportionale Signal der Kraftmeßanordnung 7 werden ebenfalls dem Schaltschwellengenerator 14 zugeführt. Durch einen Vergleich aller Werte ist es möglich, die aktuelle Schlupfgrenze zu erkennen und die Motorkennlinie für die Festlegung der erforderlichen Schaltschwellen F1 und F2 an die tatsächlichen Spannungs-, Temperatur- und Reibwertverhältnisse anzupassen. Dabei kann eine zulässige Toleranz, welche fortwährend das Korrigieren verhindert, berücksichtigt werden. Ferner ist es möglich, auf den zur Motorkennlinie Mₘₒₜₒᵣ parallelen Verlauf der Ausschaltschwelle F1 zu verzichten und den Ausschaltpunkt beim Zurückfahren des Friktionsrades 2 aufgrund des festgestellten Unterschiedes der oben angesprochenen in der Vergleichsschaltung 12 verglichenen Umfangsgeschwindigkeiten zu erkennen.

Bei dem in der Fig. 1 dargestellten Ausführungsbeispiel ergeben sich aufgrund des der Anpreßkraft proportionalen Signals der Kraftmeßeinrichtung 7 noch weitere Vorteile. Es kann ein Reifenseitenschlag aufgrund periodischer Signalschwankungen erkannt und richtungsabhängig zumindest tendenziell angezeigt werden. Ferner kann erkannt werden, ob ein Kontakt zwischen Friktionsrad 2 und Kraftfahrzeugrad 1 vorhanden ist. Damit kann sowohl für Nichtantriebsräder als auch für Antriebsräder des Kraftfahrzeuges automatisch ein Meßzyklus eingeleitet werden, ohne daß eine Meßbeeinflussung durch den Kontakt des Friktionsrades 2 am Kraftfahrzeugrad 1 vorhanden ist.

Bekanntlich müssen die Antriebsräder des Kraftfahrzeuges bei der Unwuchtmessung achsweise zunächst mit dem Fahrzeugmotor auf die erforderliche mittlere Drehzahl gebracht werden. Danach wird mit dem Elektromotor 4 des Wuchtgerätes wechselweise durch Abbremsen bzw. Antreiben die zum Messen erforderliche Drehzahldifferenz hergestellt. Für diesen Vorgang kann die Motordrehzahl noch vor dem Kontakt des Friktionsrades mit dem Luftreifen des Kraftfahrzeugrades der Raddrehzahl angepaßt werden. Die gleiche Anpassung kann auch bei Nichtantriebsrädern des Kraftfahrzeuges vorgenommen werden, wenn das auslaufende noch drehende Rad ein weiteres Mal angetrieben werden muß. Für 50 und 60 Hz ist die Motordrehzahl gleich, d.h. man benötigt nur eine Geräteausführung für das Wuchtgerät. Bei Einsatz eines Frequenzumrichters kann im 1-Phasen-Betrieb ebenfalls ein Drehstrommotor verwendet werden. Eine 1-Phasen-Ausführung ist damit leichter realisierbar und ist unter Umständen mit der 3-Phasen-Ausführung identisch.

Es wird durch die Drehzahlmeßeinrichtung 18 für den Elektromotor 4 noch der zusätzliche Vorteil erreicht, daß bei einem 1-Phasen-Betrieb der Anlaßkondensator sowohl bei 50 Hz- als auch bei 60 Hz-Betrieb drehzahlabhängig optimal geschaltet werden kann.

## Patentansprüche

1. Verfahren zum Antreiben eines zur Unwuchtmessung frei drehbaren, insbesondere angehobenen, an einem Kraftfahrzeug montierten Kraftfahrzeugrades (1) mittels eines von einem Elektromotor (4) angetriebenen Friktionsrades (2), das mit unterschiedlichen Anpreßkräften an das Kraftfahrzeugrad (1) angedrückt wird,
**dadurch gekennzeichnet**,
daß die Umfangsgeschwindigkeiten des Friktionsrades (2) und des Kraftfahrzeugrades (1), bezogen auf einen Berührungsumfang (17), an welchem das Friktionsrad (2) am Kraftfahrzeugrad (1) anliegt, ermittelt werden, und daß in Abhängigkeit vom Unterschied der beiden ermittelten Umfanggeschwindigkeiten zur Regelung des Motorantriebs der Motor ein- und ausgeschaltet wird, unstetige Regelung, und für das Ein- und Ausschalten bestimmte Anpreßkräfte als Ein- und Ausschalt-Schwellenwerte verwendet werden, wobei wenigstens der Einschalt-Schwellenwert an die Drehmoment-Drehzahlkennlinie des Elektromotors (4) angepaßt variabel ist.

2. Vorrichtung zum Antreiben eines zur Unwuchtermittlung frei drehbaren, insbesondere angehobenen, an einem Kraftfahrzeug montierten Kraftfahrzeugrades (1) mit einem von einem Elektromotor (4) angetriebenen Friktionsrad (2), welches an das Kraftfahrzeugrad (1) andrückbar ist, zur Durchführung eines Verfahrens nach Anspruch 1,
dadurch **gekennzeichnet**,
daß eine Geschwindigkeitsmeßeinrichtung (9, 10) vorgesehen ist, welche die Umfangsgeschwindigkeit des Kraftfahrzeugrades (1) am Berührungsumfang (17), an welchem das Friktionsrad (2) am Kraftfahrzeugrad (1) anliegt, mißt,
daß ferner eine Geschwindigkeitsmeßeinrichtung (11, 18) mit dem Friktionsrad (2) gekoppelt ist, die die Umfangsgeschwindigkeit des Friktionsrades (2) am Berührungsumfang (17) mißt,
daß die beiden Geschwindigkeitsmeßeinrichtungen (9, 10 und 11, 18) mit einer Vergleichseinrichtung (12) verbunden sind, welche einen Vergleich der beiden Umfangsgeschwindigkeiten durchführt,
daß zwischen Gehäuserahmen (8) und Friktionsrad (2) eine Kraftmeßeinrichtung (7) vorgesehen ist, die die Anpreßkraft des Friktionsrades an das Rad (1) mißt,
daß eine Drehzahlmeßeinrichtung (18), welche die Drehzahl des Elektromotors (4) erfaßt, mit einem Kennwertgenerator (13) verbunden ist, der in Abhängigkeit von der jeweiligen Motordrehzahl einen an die Drehmoment-Drehzahlkennlinie des Elektromotors (4) angepaßten Kennwert liefert, und
daß eine Regeleinrichtung (21; 22) an die Vergleichseinrichtung (12) angeschlossen ist, welche die Drehzahl oder das Drehmoment des Motors durch Ein- und
Ausschalten des Motors regelt in Abhängigkeit von zwei bestimmte Ein- und Ausschaltschwellen bildenden Anpreßkräften, von denen zumindest die Einschaltschwelle an die Drehmoment-Drehzahlkennlinie des Elektromotors (4) angepaßt ist.

3. Vorrichtung nach Anspruch 2,
dadurch gekennzeichnet, daß die mit dem Rad (1) gekoppelte Geschwindigkeitsmaßeinrichtung (9, 10) eine am Rad (1) anliegende Abtastrolle (9) aufweist

4. Vorrichtung nach Anspuch 2,
dadurch gekennzeichnet, daß die mit dem Friktionsrad (2) gekoppelte Geschwindigkeitsmeßeinrichtung (11, 18) eine die Motordrehzahl erfassende Drehzahlmeßeinrichtung (18) aufweist.

5. Vorrichtung nach Anspruch 2,
dadurch gekennzeichnet, daß der Kennwertgenerator (13) mit einem in der Regeleinrichtung (21) vorgesehenen Schaltschwellengenerator (14) verbunden ist, der die beiden die Ein- und Ausschaltschwellen bildenden Anpreßkräfte festlegt, wobei wenigstens die Einschaltschwelle variabel an den jeweiligen Kennwert angepaßt ist, daß die Kraftmeßeinrichtung (7) an einen mit dem Schaltschwellengenerator (14) verbundenen Kraftvergleicher (15) in der Regeleinrichtung (21) angeschlossen ist, der die Ein- und Ausschaltschwellen mit der jeweils gemessenen Anpreßkraft vergleicht, und daß die Regeleinrichtung (21) ferner eine mit dem Kraftvergleicher (15) verbundene Schalteinrichtung (16) zum Ein- und Ausschalten des Motorstromes in Abhängigkeit vom Vergleichsergebnis aufweist.

## Claims

1. A method of driving a motor vehicle wheel (1) which is freely rotatable for unbalance measuring purposes and in particular raised and which is mounted on a motor vehicle, by means of a friction wheel (2) which is driven by an electric motor (4) and which is pressed against the motor vehicle wheel (1) with different pressure forces,
characterised in that
the peripheral speeds of the friction wheel (2) and the motor vehicle wheel (1), in relation to a contact periphery (17) at which the friction wheel (2) bears against the motor vehicle wheel (1), are ascertained, and that the motor is switched on and off, discontinuous regulation, in dependence on the difference between the two ascertained peripheral speeds, for regulating the motor drive, and given pressure forces are used as switching-on and switching-off threshold values for switching the motor on and off, wherein at least the switching-on threshold value is variable in adaptation to the torque-speed characteristic of the electric motor (4).

2. Apparatus for driving a motor vehicle wheel (1) which is freely rotatable for unbalance measurement purposes and in particular raised and which is mounted on a motor vehicle, comprising a friction wheel (2) which is driven by an electric motor (4) and which can be pressed against the motor vehicle wheel (1), for carrying out a method according to claim 1,
characterised in that
there is provided a speed measuring device (9, 10) which measures the peripheral speed of the motor vehicle wheel (1) at the contact periphery (17) at which the friction wheel (2) bears against the motor vehicle wheel (1),
in addition a speed measuring device (11, 18) is coupled to the friction wheel (2), for measuring the peripheral speed of the friction wheel (2) at the contact periphery (17),
the two speed measuring devices (9, 10 and 11, 18) are connected to a comparison device (12) which effects a comparison of the two peripheral speeds,
provided between the housing frame (8) and the friction wheel (2) is a force measuring device (7) which measures the pressure force of the friction wheel against the wheel (1),
a rotary speed measuring device 18) which detects the speed of rotation of the electric motor (4) is connected to a characteristic value generator (13) which in dependence on the respective speed of rotation of the motor produces a characteristic value which is adapted to the torque-speed characteristic of the electric motor (4), and
a regulating means (21; 22) is connected to the comparison means (12) for regulating the speed of rotation or the torque of the motor by switching the motor on and off in dependence on two pressure forces which form given switching-on and switching-off threshold values and of which at least the switching-on threshold value is adapted to the torque-speed characteristic of the electric motor (4).

3. Apparatus according to claim 2 characterised in that the speed measuring device (9, 10) which is coupled to the wheel (1) has a sensing roller (9) which bears against the wheel (1).

4. Apparatus according to claim 2 characterised in that the speed measuring device (11, 18) which is coupled to the friction wheel (2) has a rotary speed measuring device (18) for detecting the speed of rotation of the motor.

5. Apparatus according to claim 2 characterised in that the characteristic value generator (13) is connected to a threshold value generator (14) which is provided in the regulating device (21) and which establishes the two pressure forces forming the switching-on and switching-off threshold values, wherein at least the switching-on threshold value is variably adapted to the respective characteristic value, the force measuring device (7) is connected to a force comparator (15) in the regulating device (21), which force comparator is connected to the switching threshold value generator (14) and compares the switching-on and switching-off threshold values to the respectively measured pressure force, and the regulating device (21) also has a switching device (16) connected to the force comparator (15) for switching the motor current on and off in dependence on the comparison result.

## Revendications

1. Procédé d'entraînement d'une roue (1) pouvant tourner librement pour mesurer un balourd, notamment levée, et montée sur un véhicule automobile, au moyen d'une roue (2) de friction, qui est entraînée par un moteur électrique (4) et que l'on appuie sur la roue (1) du véhicule automobile par des forces de pression différentes,
caractérisé en ce que
on détermine les vitesses circonférentielles de la roue (2) de friction et de la roue (1) du véhicule automobile, rapportées à une circonférence (17) de contact, où la roue (2) de friction s'applique à la roue (1) du véhicule automobile, et on branche et on débranche le moteur en fonction de la différence des deux vitesses circonférentielles déterminées pour réguler l'entraînement du moteur, (régulation avec échelons) et on utilise pour le branchement et le débranchement des forces de pression déterminées en tant que valeurs de seuil de branchement et de débranchement, au moins la valeur de seuil de branchement changeant de manière adaptée à la caractéristique couple-vitesse de rotation du moteur électrique (4).

2. Dispositif d'entraînement d'une roue (1) pouvant tourner librement pour la détermination d'un balourd, notamment levée et montée sur un véhicule automobile, comportant une roue (2) de friction entraînée par un moteur électrique (4) et pouvant être appuyée sur la roue (1) du véhicule automobile, pour la mise en oeuvre d'un procédé suivant la revendication 1,
caractérisé en ce que
il est prévu un dispositif (9, 10) de mesure de vitesse, qui mesure la vitesse circonférentielle de la roue (1) du véhicule automobile à la périphérie (17) de contact où la roue (2) de friction s'applique à la roue (1) du véhicule automobile,
un dispositif (11, 18) de mesure de vitesse est couplé en outre à la roue (2) de friction qui mesure la vitesse circonférentielle de la roue (2) de friction à la circonférence de contact,
les deux dispositifs (9, 10 et 11, 18) de mesure de vitesse sont reliés à un dispositif (12) de comparaison, qui effectue une comparaison des deux vitesses circonférentielles,
il est prévu entre le châssis (8) du boîtier et la roue (2) de friction un dispositif (7) de mesure de force, qui mesure la force de pression de la roue de friction sur la roue (1),
un dispositif (18) de mesure de vitesse de rotation, qui détecte la vitesse de rotation du moteur électrique (4), est relié à un générateur (13) de valeur caractéristique, qui fournit, en fonction de la vitesse de rotation respective du moteur, une valeur caractéristique adaptée à la caractéristique couple-vitesse de rotation du moteur électrique (4), et
un dispositif (21 ; 22) de régulation, qui régule la vitesse de rotation ou le couple du moteur par branchement et débranchement du moteur en fonction de forces de pression formant deux seuils déterminés de branchement et de débranchement, dont au moins le seuil de branchement est adapté à la caractéristique couple-vitesse de rotation du moteur électrique (4), est relié au dispositif (12) de comparaison.

3. Dispositif suivant la revendication 2,
caractérisé en ce que le dispositif (9, 10) de mesure de vitesse couplé à la roue (1) comporte un rouleau (9) de détection s'appliquant à la roue (1).

4. Dispositif suivant la revendication 2,
caractérisé en ce que le dispositif (11, 18) de mesure de vitesse couplé à la roue (2) de friction comporte un dispositif (18) de mesure de vitesse de rotation détectant la vitesse de rotation du moteur.

5. Dispositif suivant la revendication 2,
caractérisé en ce que le générateur (13) de valeur caractéristique est relié à un générateur (14) de seuil de commutation, qui est prévu dans le dispositif (21) de régulation et qui fixe les deux forces de pression formant les seuils de branchement et de débranchement, au moins le seuil de branchement étant adapté de manière variable à la valeur caractéristique considérée, le dispositif (7) de mesure de force est connecté à un comparateur (15) de force relié au générateur (14) de seuil de commutation dans le dispositif (21) de régulation, lequel comparateur compare les seuils de branchement et de débranchement à la force de pression respectivement mesurée, et le dispositif (21) de régulation comporte de plus un dispositif (16) de commutation, qui est relié au comparateur (15) de force et qui est destiné à brancher et à débrancher le courant du moteur en fonction du résultat de la comparaison.
